# EUROPEAN PATENT SPECIFICATION

(11) **EP 1 827 929 B1**
(45) Date of publication and mention of the grant of the patent: **08.10.2008**
(21) Application number: 05809235.4
(22) Date of filing: 26.11.2005
(51) Int. Cl.: B60S 1/68, A61G 5/10

(54) **WHEELCHAIR BRUSH**
BÜRSTE FÜR ROLLSTUHL
BROSSE DE CHAISE ROULANTE

(30) Priority: 29.11.2004 DK 200401855
(43) Date of publication of application: 05.09.2007
(73) Proprietor: Mtech V/Mikael Thygesen, 5792 Årslev (DK)
(72) Inventor: THYGESEN, Mikael, DK-5792 Årslev (DK)
(74) Representative: Nielsen, Leif
(86) International application number: PCT/DK2005/000758
(87) International publication number: WO 2006/056207

(56) References cited:
- WO-A-88/05400
- NL-C1- 1 019 720
- US-A- 5 188 394
- US-A- 5 860 180
- US-B1- 6 633 150

## Description

### Field of the Invention

The invention concerns a cleaning unit for cleaning a tyre on a vehicle, preferably a wheelchair, including at least one brush, where the cleaning unit is movably connected to the chassis of the vehicle via at least one connecting member, so that the cleaning unit may be brought into an active position for establishing physical contact between the brush and the tyre as well as into a passive position where there is no physical contact between the brush and the tyre, where the cleaning unit is brought from the passive to the active position by means of an actuator, such as a toggle fitting or similar.

### Background of the Invention

Wheelchair users are often in the situation that the tyres on their wheelchairs become dirty and smudged after a trip in the outdoors, why cleaning the tyres is often necessary to avoid dirt etc. from being carried indoor. Many wheelchair users are not capable of performing the cleaning by themselves due to their handicap, why they are dependent on assistance from other people for this.

In US 4,605,239 is disclosed a cleaning unit for a wheelchair including a U-shaped brush mounted on the frame of the wheelchair by means of a movable arm. The brush is stationary, which means that it does not move during cleaning of a tyre. One of the drawbacks of this invention is that the efficiency of the cleaning is depending on the rotation of the wheel, why it may be time-consuming and cumbersome to remove dirt from the tyre. Furthermore, it is difficult for a handicapped user to perform connecting and disconnecting of the cleaning unit, as this only occurs mechanically.

NL 1019720 C discloses a combination of two cleaning devices, where one cleaning device is mounted in connection with the frame of the wheelchair and includes a brush the rotation of which is powered by a drive wheel which in an active position is connected with the wheels of the wheelchair. The second cleaning device includes a number of brushes which are integrated in a ramp so that the wheelchair can drive up on this. The brushes in the ramp may in an embodiment of the invention be driven by an electric motor. The ramp is relatively large, and in many cases it will be difficult or even impossible for a wheelchair user to take the ramp with him/her. This invention is also not very suited for wheelchair users, as operating the system only occurs mechanically. The efficiency of the cleaning is dependent on both the ramp and the mounted cleaning unit, why the system is not very flexible.

### Object of the Invention

It is the object of the invention to provide an apparatus for efficiently cleaning a tyre on a vehicle, preferably a wheelchair.

### Description of the Invention

This object may be achieved by a cleaning unit according to the invention, where the cleaning unit contains a motor which is mechanically connected to the brush so that the rotation of the brush is substantially independent of the rotation of the tyre.

Thereby it is possible to achieve efficient cleaning of the tyre in that the motorised brush is in contact with the tyre in an active position, so that dirt such as soil, mud, etc. is effectively removed from the surface of the tyre. This is great advantage compared with traditional solutions, where the brush is either stationary or driven by the wheels of the vehicle via a drive wheel or the like. Since the brush according to the present invention is connected with an associated motor, this entails that the rotation of the brush is not dependent on whether the wheels of the vehicle are turning or not. This is a great advantage compared with existing solutions, as the rotation of the brush in this way may be considerably higher than the rotation of the tyre, implying a better and more efficient cleaning. This is a great advantage for the wheelchair user, as the user thereby becomes independent of the help of other people, thus increasing the independence and freedom of action of the user.

In order to clean the tyre all the way around, it is of course necessary that the brush is to go all the way around, which may be done by driving a little forwards and/or backwards. As the rotation of the brush is much greater than that of the wheel, it is only required to perform one complete revolution of the wheel. This is a great advantage compared with prior art, where it was necessary to drive back and forth a number of times in order to achieve a satisfactory result.

In a preferred embodiment of the invention, the electric motor and the brush are interconnected via mechanical transmission means, which e.g. may consist of drive belts, chains and/or a gearing. Hereby is avoided that the brush is to be mounted directly on the shaft of the motor, which is space-saving, but at the same time provides the designer the option of adjusting parameters such as moment and rotational speed of the brush. In order to protect the transmission parts against weather and wind, these may advantageously be integrated in a housing.

The invention may advantageously be applied in connection with electrically powered wheelchairs where there is a possibility of establishing connection between the battery of the wheelchair and the cleaning unit, thus avoiding fitting a separate source of energy such as a power supply. It is to be emphasised, however, that the present invention is not limited to electrically powered wheelchairs, such as an electric wheelchair or similar, and that the invention also may be used in connection with manual wheelchairs without power supply. In these cases it is necessary to install a source of energy such as a battery.

The connecting element that connect the cleaning unit with the chassis of the vehicle, may in a preferred embodiment of the invention include an actuator which is supplied from a source of energy, whereby the position of the cleaning unit can be changed just by pushing a button or similar. The actuator may be electrically or alternatively hydraulically powered. Advantageously, one may use a linear actuator containing a spindle or similar. Alternatively, a magnetic actuator may be used, where the magnetic actuator contains a coil that interacts with a movable member. In that way it is possible to activate or deactivate the actuator by switching on or switching off a current in the coil, which may be done via a button on an operating panel. As the actuator is powered by a source of energy, this may be actuated/operated by means of electric means of actuation. This is a substantial advantage compared with existing solutions which often use a manual actuator as e.g. a handle which is not suited for handicapped users. Many handicapped are therefore prevented from using existing solutions, but by means of the present invention, it is now possible to connect the cleaning unit with a handicap-friendly operation, so that users which are strongly handicapped may operate and use the cleaning unit. In a preferred implementation of the invention, the actuator is connected to the same source of energy as the motor of the cleaning element.

In a preferred embodiment of the invention, the brush is replaceably mounted on a two-part shaft, which two-part shaft includes two shaft members and a spring. One shaft member has means for engaging the transmission means of the cleaning unit. The two shaft members are displaceably interconnected via the spring which is mounted between the two shaft members, so that the length of the two-part shaft can be changed by compressing the spring. The shaft and the exchangeable brush may hereby be dismounted by sliding one shaft member against the other so that the total length of the two-part shaft is reduced. In that way, the connection between the two-part shaft and its connection to the two connecting units of the cleaning unit is loosened, where in an embodiment of the invention the two connecting units include a connection to the transmission of the cleaning unit and opposing bearing. The brush and the shaft may hereby readily be removed, and it is now easy to replace the brush by pushing the shaft through the brush.

In order to achieve efficient cleaning of the tyre, it is necessary that the contact between the tyre and the brush is maintained under cleaning. This may be done by the connecting element keeping the position of the cleaning element during cleaning. By normal driving, the position of the cleaning element is set so that there is no contact between brush and tyre, whereby there is no wear on tyre and brush as well as unnecessary motion resistance.

By activating the cleaning unit, the position of the cleaning element is changed by means of the connecting element simultaneously with starting the motor. Correspondingly, when cleaning of the tyre is finished, the position of the cleaning element is changed so that there is no contact between tyre and brush, and the motor is switched off.

In order to achieve that dirt from the tyre during cleaning is not spread unnecessarily, the cleaning element should be connected to a guard partly enclosing the brush.

Hereby is avoided that the dirt is sprayed in an unsuitable direction, and thereby an unwanted dirtying of the vehicle or the user is avoided.

In the shown embodiment, the brush is cylindric, but in other embodiments the brush could be U-shaped etc. Finally, the brush may also rotate around an axis of revolution which is substantially perpendicular to the tangent of the wheel/tyre, instead of, as in the shown embodiment, where the axis of revolution is substantially parallel with the axis of revolution of the wheel. In a preferred embodiment, the individual hairs of the brush are relatively hard/stiff, so that the contaminations sitting firmly on the tyre may be brushed off.

### Description of the drawing.

The invention is described in more detail with reference to the drawing, where:
- FIG. 1: shows a schematic outline of a cleaning unit mounted on a chassis;
- FIG. 2: shows a cleaning unit mounted on a chassis as seen from the side;
- FIG. 3: shows a partial drawing of the cleaning unit;
- FIG. 4: shows a partial drawing of the cleaning unit;
- FIG. 5: shows a perspective view of the cleaning unit;
- FIG. 6: shows a transparent main view of a preferred embodiment;
- FIG. 7: shows a transparent main view of a preferred embodiment;
- FIG. 8: shows an embodiment of the brush; and
- FIG. 9: shows a perspective view of the brush.

### Detailed Description of the Invention

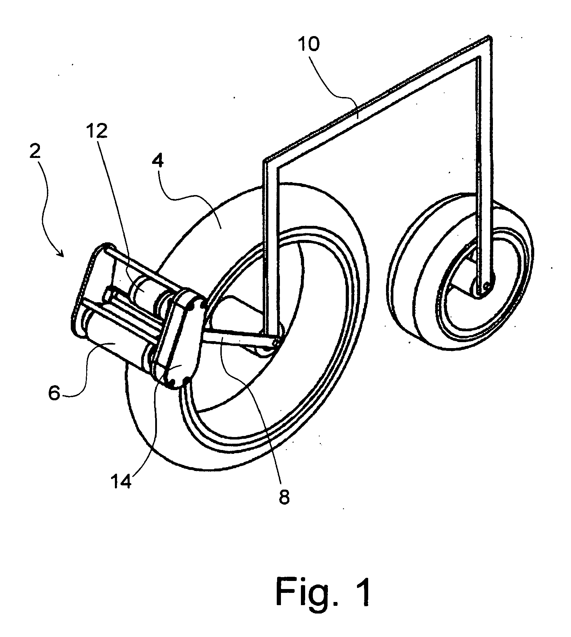

Fig. 1 shows a schematic outline of the cleaning unit 2 which is movably connected to a chassis 10 on a wheelchair via a connecting element 8. It is to be noted that it is only one side of a wheelchair which is depicted on the Figure. The cleaning unit includes a brush 6 which is mechanically connected to an electric motor via a transmission which is integrated in the housing 14 of the cleaning unit 2. During cleaning, the brush is to be in physical contact with the tyre 4 so that the dirt possibly deposited on the tyre can be brushed off. Since the cleaning unit 2 is movably connected to the chassis 10 via the connecting element 8, it is possible to change the position of the cleaning unit 2 so that during normal cleaning there is no contact between the brush 6 and the tyre, and vice versa that there is contact between the tyre and the brush during cleaning.

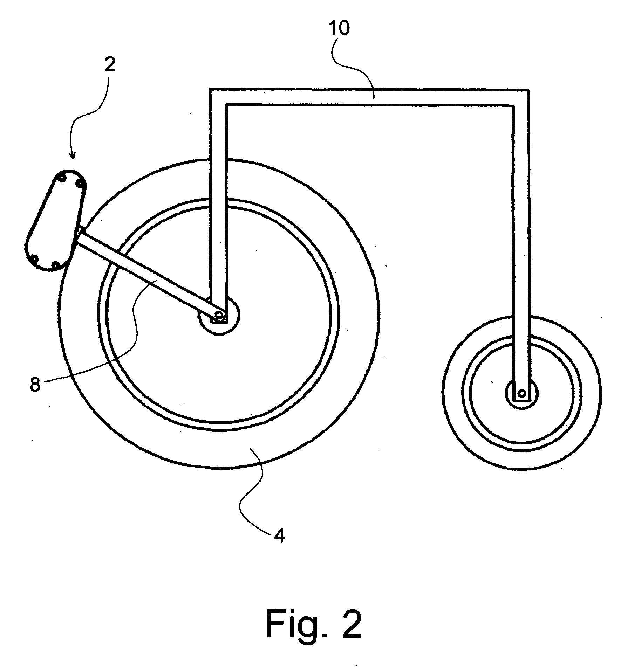

Fig. 2 shows the same embodiment of the invention as illustrated in Fig. 1, only viewed from the side, where the cleaning unit 2 is movably connected to the chassis 10 via the connecting element 8. In the specific embodiment, it is only in connection with the large tyre 4 that a cleaning unit 2 is installed, which means that there is to be used two cleaning units 2 for a traditional wheelchair. The present invention may of course be installed in connection with all tyres/wheels on the vehicle, but in connection with a traditional wheelchair it is often the rear tyres/wheels 4, where sand, earth and mud have a tendency to accumulate due to grooves and patterns in the tyres.

It is important to note that Fig. 1 and Fig. 2 are just schematic outlines.

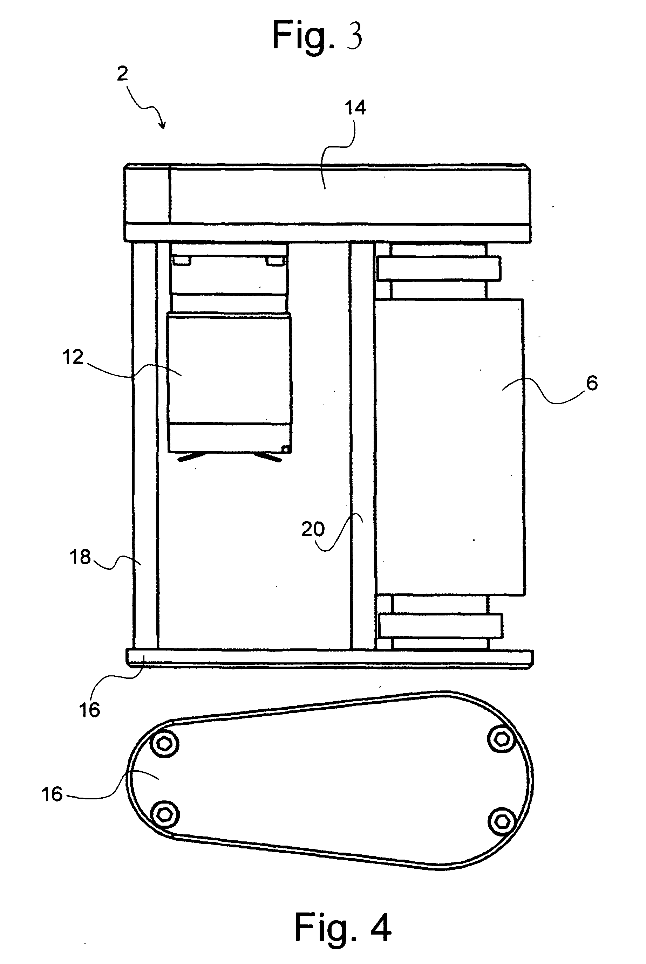

On Fig. 3, the cleaning unit appears containing an electric motor 12 which is connected to the brush 6 via mechanical means of transmission (not shown) which is disposed inside the housing 14. The housing 14 and the side face 16 together with crossbars 18, 20 form a stable frame for the motor 12 and the brush 6.

Fig. 4 shows the transmission housing from the side, containing mechanical transmission means (not shown) which connect the motor 12 (shown on Fig. 3) and the brush 6 (shown on Fig. 3).

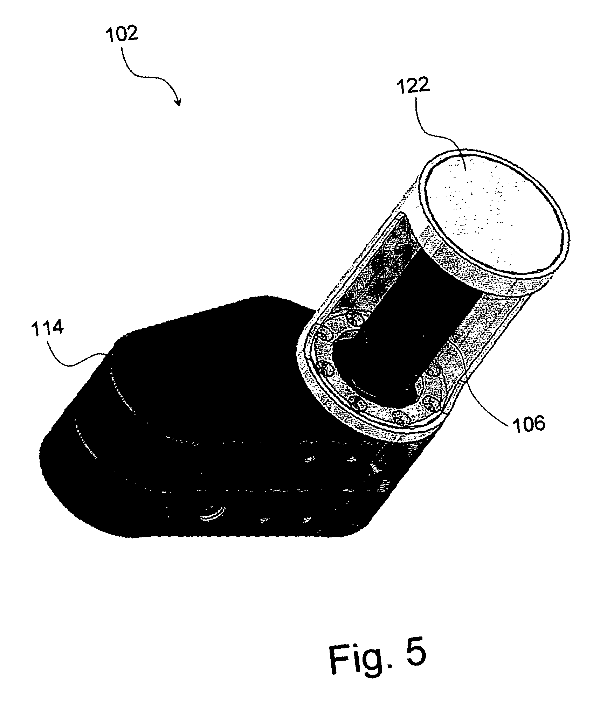

On Fig. 5 is seen a preferred embodiment of the invention, consisting of a housing 114 in which the motor (not shown) and the mechanical transmission means (not shown) are integrated. The housing 114 provides protection for the motor (not shown) and the transmission (not shown) against water and contaminations. The brush 106 is partly enclosed by a guard 122 preventing dirt from being spread in random directions when the brush is rotating. One of the advantages of the shown embodiment is that the brush 106 is rapid as well as easy to dismount, which is a great advantage in connection with maintenance and replacement of the brush.

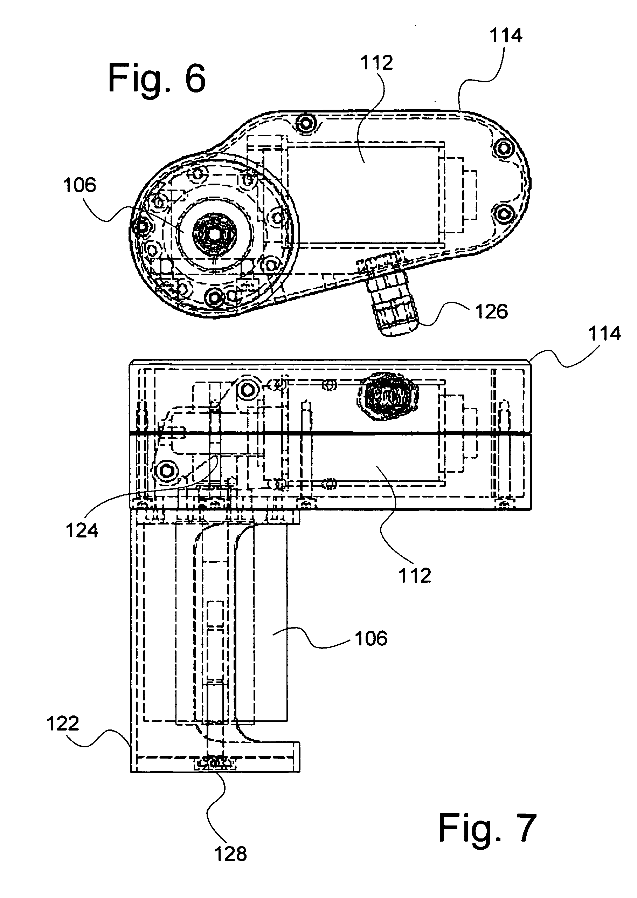

On Figs. 6 and 7 appear main views of the preferred embodiment of the invention in the shape of transparent assembly drawings. On the Figures, the brush 106 and the housing 114 are seen, in which the motor 112 and the transmission means 124 are contained. The cap 126 ensures that the lead-in of the signal and supply wires for the motor 112 is weatherproof so that water and moisture do not penetrate into the housing 114.

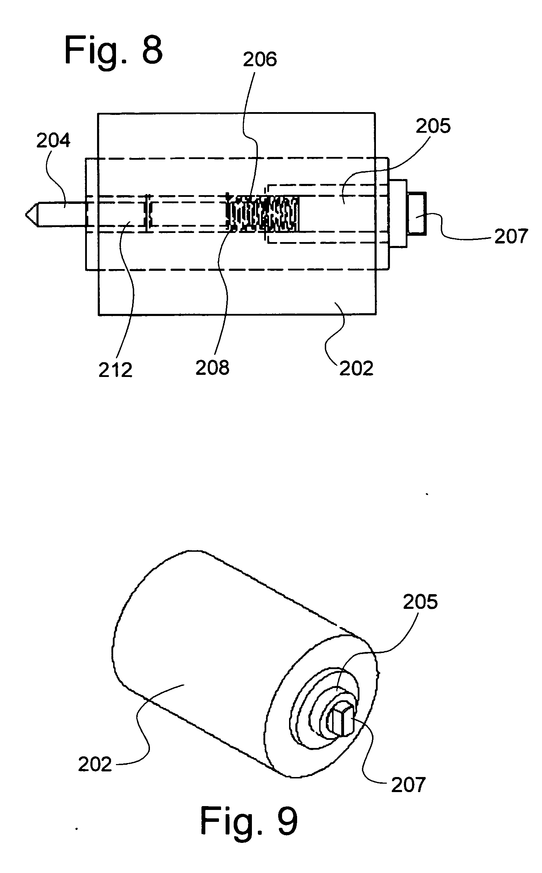

On Fig. 8 appears an embodiment of a brush 202 and a through-going two-part shaft including two shaft members 204 and 205 and a spring 206. One shaft member 205 has means 207 for engaging the transmission means of the cleaning unit (not shown), and the two shaft members 204 and 205 are displaceably interconnected via the spring. The two locking rings 210 and 208 form a stop for the spring and the shaft, respectively, so that they are not pulled from each other when the brush and the two-part shaft are separated.

When the brush is installed in the cleaning unit, the spring 206 provides for the two shaft members 204 and 205 being displaced away from each other so that the two-part shaft is extended by means of the spring force and is secured between the connection for the transmission (124 on Fig. 7) and the bearing (128 on Fig. 7). The length of the two-part shaft is reduced by displacing the two shaft members 204 and 205 against each other. This may be done by gripping the brush 202 with one hand and pressing the brush 202 away from the connection to the transmission (124 on Fig. 7), whereby the connection between the two-part shaft and the cleaning unit is reduced, and the brush 202 and the two-part shaft may be removed.

Fig. 9 shows the same brush as on Fig. 8 and just in a perspective view including a brush 202 and one shaft member 205 and means for engaging the transmission (124 on Fig. 7).

## Claims

1. A cleaning unit (2, 102) for cleaning a tyre (4) on a vehicle, preferably a wheelchair, including at least one brush (6, 106), where the cleaning unit (2) is movably connected to the chassis (10) of the vehicle via at least one connecting member (8), so that the cleaning unit (2, 102) may be brought into an active position for establishing physical contact between the brush (6, 106) and the tyre (6, 106) as well as into a passive position where there is no physical contact between the brush (6, 106) and the tyre (4), where the cleaning unit (2, 102) is brought from the passive to the active position by means of an actuator, **characterised in that** the cleaning unit includes a motor (12) which is mechanically connected to the brush so that the rotation of the brush (6, 106) is substantially independent of the rotation of the tyre (4).

2. Cleaning unit (2,102) according to claim 1, **characterised in that** the cleaning unit (2,102) is electrically connected to the power supply of the vehicle.

3. Cleaning unit (2,102) according to at least one of claims 1- 2, **characterised in that** the actuator is supplied from an energy source, and that actuation of the actuator is effected by means of electric actuation means.

4. Cleaning unit according to at least one of claims 1 -3, **characterised in that** the actuator is a linear actuator.

5. Cleaning unit according to at least one of claims 1 -3, **characterised in that** the actuator is a magnetic actuator containing a coil that interacts with a movable member.

6. Cleaning unit according to at least one of claims 1-6, **characterised in that** the brush (106, 202) is exchangeably mounted on a two-part shaft (203), the two-part shaft (203) including two shaft members (204,205) and a spring (206), where one shaft member (205) has means (207) for engaging the transmission means (124) of the cleaning unit, and where the two shaft members (204, 205) are displaceably interconnected via the spring (206) which is mounted between the two shaft members (204,205), so that the length of the two-part shaft (204,205) can be changed by compressing the spring (206).

7. Cleaning unit according to at least one of claims 1-6, **characterised in that** the brush (106) is partially surrounded by a guard (122) in order to prevent contaminants from being spread.

## Patentansprüche

1. Reinigungseinheit (2, 102) zur Reinigung eines Reifens (4) auf einem Fahrzeug, vorzugsweise einem Rollstuhl, umfassend zumindest eine Bürste (6, 106), wobei die Reinigungseinheit (2) mittels zumindest eines Verbindungselements (8) mit dem Chassis (10) des Fahrzeugs bewegbar verbunden ist, so dass die Reinigungseinheit (2, 12) in eine aktive Position zur Etablierung physisches Kontakts zwischen der Bürste (6, 106) und dem Reifen (6, 106) bringbar ist, sowie in eine passive Position ohne physischen Kontakt zwischen der Bürste (6, 106) und dem Reifen (4), in der die Reinigungseinheit (2, 102) mittels eines Stellgliedes von der passiven zur aktiven Position gebracht wird, **dadurch gekennzeichnet, dass** die Reinigungseinheit einen Motor (12) umfasst, der mit der Bürste mechanisch verbunden ist, so dass die Rotation der Bürste (6, 106) im wesentlichen von der Rotation des Reifens (4) unabhängig ist.

2. Reinigungseinheit (2, 102) nach Anspruch 1, **dadurch gekennzeichnet, dass** die Reinigungseinheit (2, 102) mit der Stromversorgung des Fahrzeugs elektrisch verbunden ist.

3. Reinigungseinheit (2, 102) nach mindestens einem der Ansprüche 1-2, **dadurch gekennzeichnet, dass** das Stellglied von einer Energiequelle versorgt wird, und **dass** Betätigung des Stellgliedes durch elektrische Betätigungsmittel erfolgt.

4. Reinigungseinheit nach mindestens einem der Ansprüche 1 bis 3, **dadurch gekennzeichnet, dass** das Stellglied ein lineares Stellglied ist.

5. Reinigungseinheit nach mindestens einem der Ansprüche 1 bis 3, **dadurch gekennzeichnet, dass** das Stellglied ein magnetisches Stellglied ist, das eine Spule enthält, die mit einem bewegbaren Element zusammenwirkt.

6. Reinigungseinheit nach mindestens einem der Ansprüche 1 bis 6, **dadurch gekennzeichnet, dass** die Bürste (106, 202) an eine zweiteilige Achse (203) austauschbar montiert ist, wobei die zweiteilige Achse (203) zwei Achseteile (204, 205) und eine Feder (206) umfassen, wobei ein Achseteil (205) Mittel zum Eingreifen mit den Übertragungsmitteln (124) der Reinigungseinheit aufweist, und wobei die zwei Achseteile (204, 205) durch die Feder (206) mit einander versetzbar verbunden sind, die zwischen den zwei Achseteilen (204, 205) montiert ist, so dass die Länge der zweiteiligen Achse (204, 205) durch Zusammendrücken der Feder (206) veränderbar ist.

7. Reinigungseinheit nach einem der Ansprüche 1 bis 6, **dadurch gekennzeichnet, dass** die Bürste (106) von einem Schirm (122) teilweise umschlossen ist, um die Ausbreitung von Schmutzstoffen zu vermeiden.

## Revendications

1. Unité de nettoyage (2, 102) pour le nettoyage d'un pneu (4) d'un véhicule, de préférence une chaise roulante, comportant au moins une brosse (6, 106), l'unité de nettoyage (2) étant liée au chassis (10) du véhicule de façon mobile par au moins un élément de liaison (8), de sorte que l'unité de nettoyage (2, 102) peut être mise dans une position active pour établir un contact physique entre la brosse (6, 106) et le pneu (6, 106) ainsi que dans une position passive où il n'y a aucun contact physique entre la brosse (6, 106) et le pneu (4), l'unité de nettoyage (2, 102) étant disposée de la position passive à la position active par l'intermédiaire d'un actuateur, **caractérisée en ce que** l'unité de nettoyage comporte un moteur (12) qui est lié à la brosse mécaniquement de sorte que la rotation de la brosse (6, 106) est essentiellement indépendante de la rotation du pneu (4).

2. Unité de nettoyage (2,102) selon la revendication 1, **caractérisée en ce que** l'unité de nettoyage (2,102) est liée électriquement à l'alimentation en courant du véhicule.

3. Unité de nettoyage (2,102) selon l'une au moins des revendications 1-2, **caractérisée en ce que** l'actuateur est alimenté d'une source d'énergie et que l'actuation de l'actuateur est effectuée par l'intermédiaire de moyens d'actuation électriques.

4. Unité de nettoyage selon l'une au moins des revendications 1-3, **caractérisée en ce que** l'actuateur est un actuateur linéaire.

5. Unité de nettoyage selon l'une au moins des revendications 1-3, **caractérisée en ce que** l'actuateur est un actuateur magnétique comprenant une bobine coopérant avec un élément mobile.

6. Unité de nettoyage selon l'une au moins des revendications 1-6, **caractérisée en ce que** la brosse (106, 202) est montée de manière amovible sur un arbre en deux pieces (203), l'arbre en deux pieces (203) comportant deux elements d'arbre (204,205) et un ressort (206), dont un élément d'arbre (205) dispose de moyens (207) pour engagement dans les moyens de transmission (124) de l'unité de nettoyage, et les deux éléments de nettoyage (204, 205) sont liés de façon déplaçable au ressort (206) qui est monté entre les deux éléments d'arbre (204,205), de sorte que la longueur de l'arbre en deux piéces (204,205) peut être modifiée en comprimant le ressort (206).

7. Unité de nettoyage selon l'une au moins des revendications 1-6, **caractérisée en ce que** la brosse (106) est partiellement entourée par un garde-boue (122) pour empêcher des impuretés à être dispersées.
